# EUROPEAN PATENT SPECIFICATION

(11) **EP 0 720 898 B1**
(45) Date of publication and mention of the grant of the patent: **05.12.2001**
(21) Application number: 95120345.4
(22) Date of filing: 21.12.1995
(51) Int. Cl.: B29B 17/02, B29C 47/38, B29C 47/80, B03B 9/06

(54) **Improvement in the recycling method for the re-use of solid household and similar wastes**
Verbesserungen im Recyclingsprozess zur Wiederverwendung des Haushaltabfalls
Améliorations dans une méthode de recyclage pour la réutilisation des ordures ménagères

(30) Priority: 23.12.1994 IT PN940079
(43) Date of publication of application: 10.07.1996
(73) Proprietor: Techline Services and Engineering S.A., 6900 Lugano (CH)
(72) Inventor: Panontin, Mario, I-31040 Meduna di Livenza (TV) (IT); Bertoglio, Mario, I-44100 Ferrara (IT)
(74) Representative: Dalla Rosa, Adriano

(56) References cited:
- EP-A- 0 140 846
- EP-A- 0 619 169
- DE-A- 2 837 621
- FR-A- 1 351 109
- US-A- 5 141 326
- US-A- 5 217 655
- US-A- 5 217 800

## Description

The present invention refers to an improved method for recycling and moulding by extrusion appropriately sorted-out and pre-treated materials derived from solid household and similar waste, hereinafter referred to generally as solid household waste, collected in towns.

From DE-A-2837621 is known a method for re-compacting and moulding solid waste plasticized substances using heterogeneous materials, wherein said waste is previously cleaned to remove earthy substances, organic substances and metals ; said waste compound is finely shredded ; additives are added into said shredded compound ; said compound is extruded in an extruder barrel for injection into appropriate dies; and wherein the temperature of the compound during extrusion within the extruder barrel is controlled and increases progressively, so as to permit to melt the plasticized substances with different melting temperatures and to separate them respectively from the other substances under progressively higher melting temperatures, in a manner that each separated plastic material can be recovered and re-used for subsequent applications.

From US-A-5 217 800 there is known a method of producing shaped articles comprising plastic waste particles embedded therein. However, specific processing conditions to recycle heterogeneous household plastics waste comprising materials having different melting temperatures are not disclosed from this document.

The present invention relates to a method of recycling heterogeneous household plastics waste as disclosed by the above reference DE-A-2837621, in which however these substances are recovered in a manner and with processing conditions which are different than the preceding ones and which do not require to separate the different substances from each other, but on the contrary permit to mix them all together.

This is achieved by the method according to the present invention as disclosed in the appended claim.

The invention will anyway be more clearly understood from the description which is given below by way of nonlimiting example with reference to the accompanying drawings, in which:
- Figures 1 and la are views of a longitudinal section of an extruder screw according to the present invention (fig. 1) and a corresponding extruder screw of a traditional type (fig. 1a) respectively;
- Figure 2 is a diagrammatical view of the evolution of the temperature vs. time in the area of the extruder screw in the two methods being compared, ie. the traditional one and the method according to the present invention;

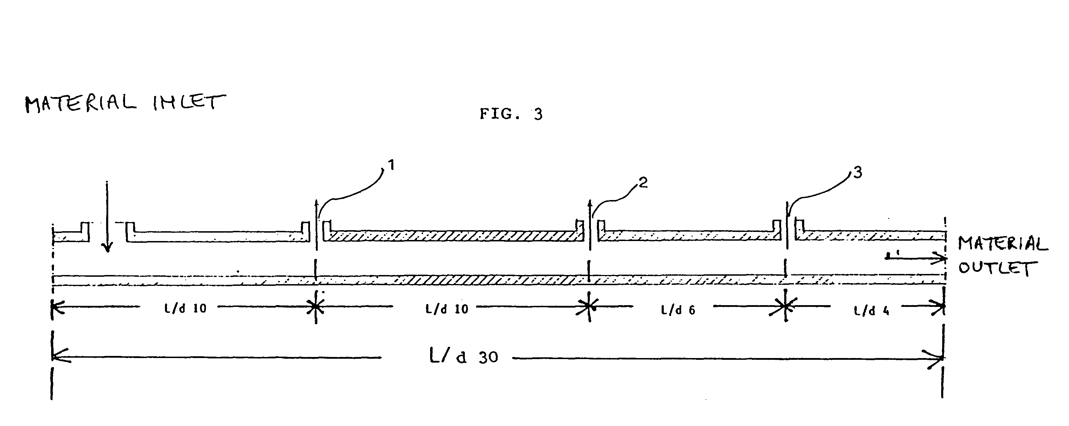

- Figure 3 is a schematical view of the longitudinal section of the barrel of an extruder according to the present invention;
- Figure 4 is a diagrammatical view of the evolution of the pressure within the extrusion barrel vs. the distance from the loading or feeding gate;
- Figure 5 is a diagrammatical view of the evolution of the temperature within the extrusion barrel vs. the distance from the loading or feeding gate; and

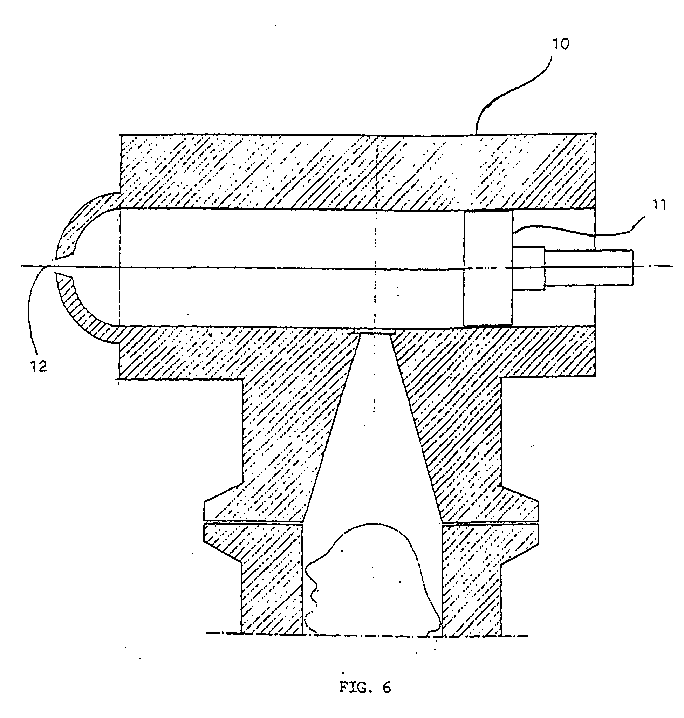

- Figure 6 is a cross-sectional view of an injection head for application to an extruder according to the present invention.

In compliance with the afore cited aims of the invention, the methods starts from an amount of material in a shredded condition, which has been previously prepared and sorted out.

To mere documentation purposes, since those skilled in the art are generally well acquainted with this particular matter, a short description will be given below of how such starting material is obtained. The process starts from solid household waste in its original, as-collected state, which is then caused to undergo various process stages of gravimetric-type separation, filtration and, possibly, chemical separation, wherein use is made on the one hand of the difference in the specific gravity of the different materials in the waste compound and/or the difference in the solubility of the same materials in the presence of appropriate selective solvents.

The first processing stage which the so prepared material then undergoes is the shredding operation. This is followed, after due electromagnetic treatment aimed at removing metals, particularly heavy metals, by a stage in which the shredded material is transferred into one or more tanks, where the compound is washed with an appropriate aqueous detergent solution.

During such cleaning operation, apart from watersoluble pollutants, also finely grained inorganic substances and particles (such as powders, sand, clay, etc.) are removed along with paper and related derivative products. The compound is then conveyed into a second tank where all substances having a greater density than a pre-determined level, usually of approx. 1.4 (products containing considerable amounts of residual fillers and metals that failed to be removed therefrom during the previous process stages), are separated by allowing them to settle. Glass products may be allowed to stay in the compound, since they are finely shredded and, furthermore, they do not interfere with the subsequent extrusion process, since such material behaves like a charge or a filler.

At this point in the process, the resulting compound will be substantially made up by following categories of materials:
- polyolefins, comprising above all such materials as HDPE, or high-density polyethylene, LDPE, or low-density polyethylene, PP, or polypropylene;
- vinyl-based polymers, such as PVC, EVA or ethyl vinyl acetate;
- styrene-based polymers, such as PS, or polystyrene, and ABS;
- polycondensation polymers, such as PA, or polyamide, PET, or polyethylene terephthalate, PBT, or polybutadiene.

These materials may in turn contain a number of agents such as plastifiers, fillers, reinforcement charges and/or various pigments.

All of the above cited operations have been described by mere way of general information and, since they are well-known in the art, they shall not be illustrated any further.

It has been observed that the greatest part of such a mix of resins proceeding from solid household waste is in all cases made up by polyolefin-based resins, such as high-density and low-density polyethylene, polypropylene and the like, ie. resins that have glass transition temperatures ranging between 110°C and 160°C.

The peculiarity of the compound lies in the utilization of a mix of resins that differ from each other, and may also be incompatible with each other, said differing resins being then made compatible through the addition of appropriate process stabilizers and the use of so-called bridging resins, which enable potentially incompatible resins to polymerically combine or bind together, or process stabilizers or elastomers and, if the compound appears too soft, possibly also mineral fillers.

The techniques used to bring such additives into the compound and the related materials used as additives are generally known in the art, so that they shall not be described any further here.

The method according to the present invention may be carried out in a substantially traditional plant, however introducing some modifications and adding some characteristics as better explained further on.

Such a plant comprises a hopper, into which the compound is poured after having been prepared and possibly additivated according to the afore illustrated procedures, an extruder, which is adapted to receive the compound from the hopper, melt it, homogenizing it and eventually extruding it into an appropriate die where the compound, which at this point is already in a state of molten plastic resin, is cooled down, solidified and then ejected.

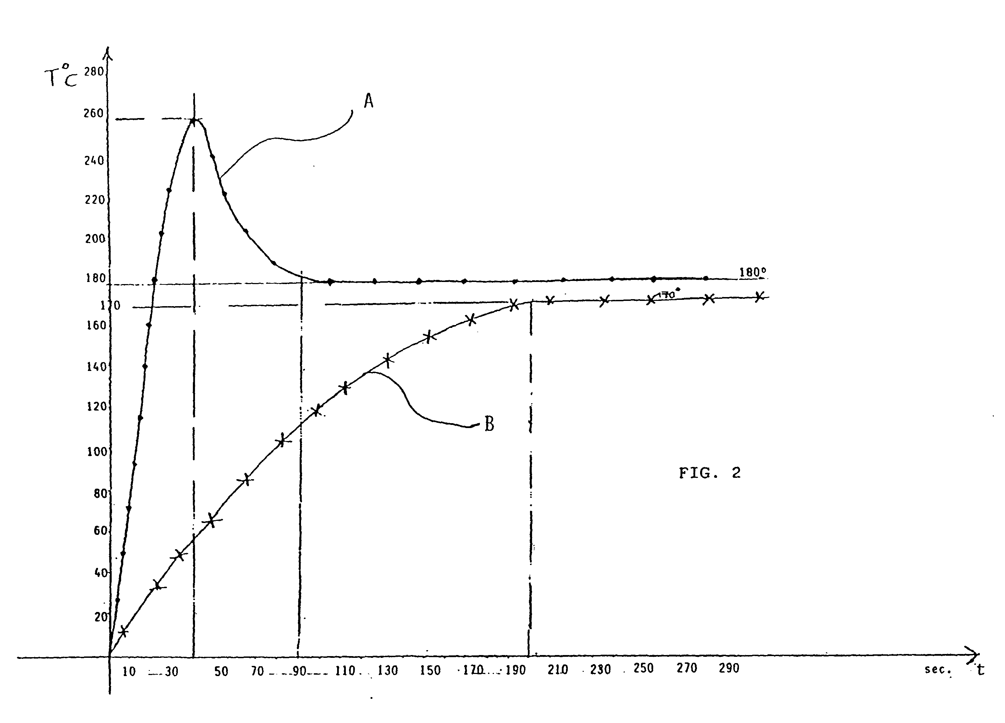

With particular reference to Figure 2, it can be noticed how the method according to the present invention involves a gradual heating up of the compound, while however failing to reach excessively high temperature at any point during the process. The highest optimum temperature is situated anywhere between 170°C and 180°C, and this temperature is reached by the compound after approx. 3-to-4 minutes from the moment it unloads from the hopper into the extruder, ie. when said compound is already almost in a state of molten resin.

The same Figure 2 clearly illustrates and emphasizes one of the features of the method according to the present invention, which differs from traditional-type methods in that the temperature, in such traditional methods, is rapidly increased to beyond 250°C, and quite often even to 300°C, thereby giving rise to the already mentioned problems of qualitative degradation and toxicity (curve A).

Once the highest temperature required to substantially melt all types of plastics in the compound is reached, the temperature, in traditional-type methods, is rapidly decreased to the optimum value for the extrusion, ie. approx. 180°C.

In the method according to the present invention, on the contrary, the compound, already thoroughly mixed up in its components, is fed into a twin-screw extrusion machine supplying a low-pressure reciprocating-screw injection unit.

The extrusion process is carried out under a very slow rotation of the extruding screws and at a low temperature (max. 180°C), with a very gentle rise gradient (curve B).

The extrusion process may be either continuous or discontinuous, since possible short interruptions would not spoil the product thanks to the low inner temperature of the extruder (provided of course that this temperature is actually held).

A possible presence of PVC, the effects of which in the case of a possible degradation process are devastating owing to the generation of HCL (hydrochloric acid), is neutralized both through the addition of stabilization additives and thanks to the low processing temperature of the extruder.

As a result, the PVC resin is embedded in the melt of the polyolefin-based resins in the same manner as it were a mineral filler, and is therefore made inert.

The same applies also to PA 6 (polyamide 6) - 66 - 9 - 11, PC (polycarbonate), PS, AC (acetal), PET, PETF (polytetrafluoroethylene or TEFLON) and similar resins.

A list of plastic materials that can be more commonly found in such compounds from solid household waste is given below along with the related melting temperatures (in °C):
- 110°: LDPE (Low-density polyethylene)
- 120°: PE/LLD (Linear low-density polyethylene)
- 120°: MDPE (Medium-density polyethylene)
- 140°: HDPE (High-density polyethylene)
- 160°: PP (Polypropylene omopolymer and copolymer)
- 160°: ABS (Acrylonitrile butadiene styrene)
- 160°: PS (Polystyrene)
- 175°: PVC (Polyvinyl chloride)
- 220°: PA (Polyamide)
- 320°: PET (Polyethylene terephtalate)
- 320°: PC (Polycarbonate)
- 450°: PETF (Polytetrafluoroethylene).

The ingeniousness and the novelty of the method according to the present invention lie on the fact that, instead of trying to complete the melting of all of the resins in the compound, which, even when leaving the greater energy usage costs apart, would in any case bring about the whole set of afore cited drawbacks, only those resins melting at a temperature below a pre-determined value, typically 170-to-180°C, are actually melted and homogenized in the process.

The remaining resins, in particular PVC, PET and Teflon compounds, are not melted, but are on the contrary embedded, ie. filled in the resin mass, so that they act as inert fillers, owing also to the action of the alloying agents and the other additives that are present in the compound fed into the extruder.

It has been repeatedly observed experimentally that, for the resins to be completely homogenized in an optimum manner, the extrusion process shall take place at a reduced speed and a very low pressure. Furthermore, a plurality of degassing ports shall be provided, since it has been observed that, for the process to be performed under optimum conditions, it is appropriate for the gases of various nature developing from the compound during the heating-up and extrusion phases to be removed from the resin mass being processed. Finally it shall be ensured that well-defined relationships exist between the evolution of the temperature and the evolution of the pressure, as well as between said temperature and pressure evolution and the respective distance from the feeding or loading gate, this being measured as the ratio of the length of the extruder barrel 4 and the inside diameter thereof, and also between the degassing ports and the respective distances from said feeding or loading gate. A well-defined ratio shall furthermore exist between the inside diameter of the extruder barrel and the length thereof.

As far as this latter element is concerned, which has turned out as being of a critical importance, it has been found that if such a ratio is approx. 30, and lies in any case within the 28 and 32 range, particularly if it is associated to a conical screw with a compression ratio varying from 1:1 to 1:2.8 from the beginning through to the end of the extruder barrel, the process is optimized to a particularly great extent both from a qualitative and a energy-efficiency point of view.

It has therefore been advantageously provided for the method according to the present invention to comprise three distinct, successive degassing steps, the first one of which, generally shown at 1, is located at a short distance from the feeding gate from the hopper into the extruder and is assigned the task of exhausting a first portion of the moisture due to the presence of water in the compound. The second one, generally shown at 2, is located at approx. half way along the screw and has the task of exhausting both the residual moisture that has not been removed by the first degassing step and the gases generated by the evaporation of low-melting substances (such as for instance polyethylene-based waxes, grease and lubricants in general). The third degassing step, generally shown at 3, is located almost at the oulet end of the extruder and removes from the melt the gas that may possibly be generated by a degradation or decomposition process of the polymers.

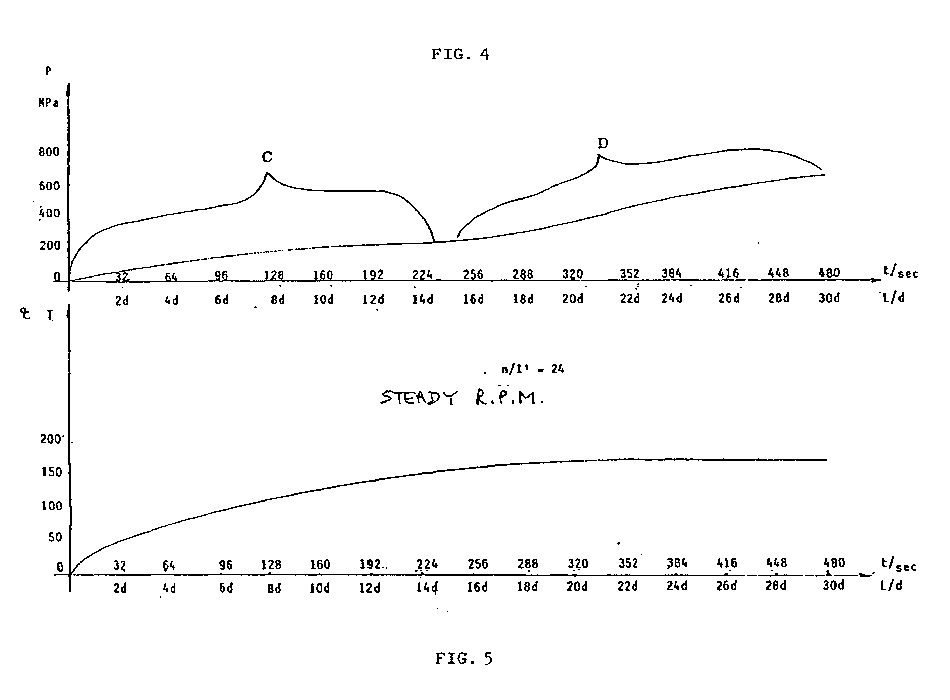

However, the predominant process variables in the method according to the present invention relate to the evolution of the temperature and the pressure within the extruder barrel. In this connection, the typical evolutions of both the pressure and the temperature along the barrel may be observed by referring to Figures 4 and 5, wherein it can be first of all noticed that the pressure increases progressively, following a rather regular evolution pattern, until it reaches a pressure value of approx. 750 MPa. It can be further noticed that the temperature rises at a progressively decreasing rate until it almost stabilizes, during the second half of the extruder stroke, at a value that does not exceed 180°C. It can be also observed that there is a particular coincidence in the patterns of evolution of said two curves. As a matter of fact, the pressure curve shows that said pressure increases along two successive distances C, D with two respective angles of slope, wherein said second distance D exhibits an angle of slope which is clearly, although not markedly, greater than the corresponding angle of slope of said first distance C. The zone at which the pressure curve undergoes a variation in its angle of slope coincides with the zone at which the temperature almost reaches its highest value before stabilizing.

This can be explained with the fact that, in such a zone, the temperature must have reached its highest value in order to enable the components having a melting point lower than 180°C to be melted and inglobate the other components in the remaining length of the extruder barrel, whereas the pressure must increase progressively so as to enable the material to be mixed efficiently, such efficiency being further boosted by a particular configuration of the extruder screw, as it will be more clearly described further on.

As a consequence, the material undergoes a sort of shearing, almost straining effect which therefore improves its uniformity, but at the same time generates heat. This would of course have the undesired effect of further increasing the temperature along the second half of the extruder in a manner that is not acceptable on account of the afore explained reasons.

The need therefore arises sometimes to provide some form of cooling down in the second half of the extruder. Anyway, the methods that can be used to implement such a cooling down effect are generally known in the art, so that they shall not be explained here any further.

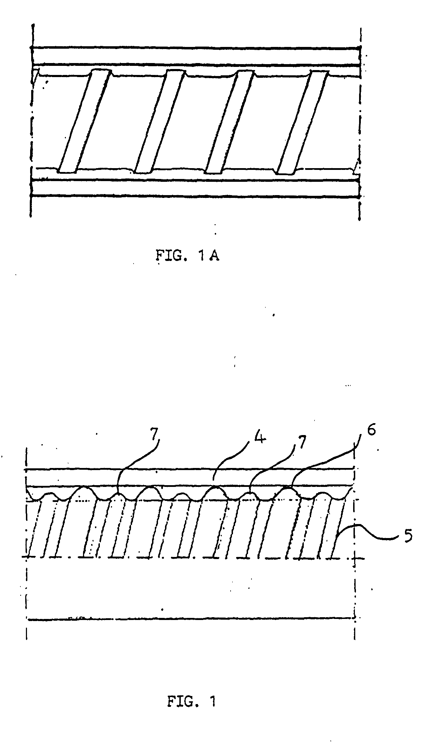

In order to prevent the compound from being spoiled or undergoing degradation, while at the same time promoting a greater uniformity of the melt and the complete amalgamation thereof, the process is improved through the utilization of a special type of screw 5, the longitudinal section of which is illustrated in Figure 1.

The screw 5 is heated also centrally; it is a screw rotating at a slow speed and having a so-called "thread-transfer" profile, in that the extrusion screw has its main pushing screw thread 6 which is shaped with a curvilinear profile instead of the rectangular section typically found in traditional screws.

It has been further observed that a better homogenization of the resin and a more uniform distribution of the temperature can be obtained if the spiral of the main pushing thread 6 of the screw is arranged so as to alternate with a parallel spiral of a secondary pushing screw thread 7 having the respective shoulder arranged at a lower height with respect to the height of the shoulder of the main pushing thread.

The use of such "thread transfer" technique enables an excellent cavitation and, as a result, a good blending of the compound to be obtained. At the same time, no significant friction and resulting heat generation effects take place.

The operational control of a screw of the above described type is quite easy as compared with the case of traditional screws which require a more careful, sensitive control due to the material being easily exposed to overheating events that may readily trigger undesired chain reactions.

There are however other factors that need due consideration in view of optimizing the process, such as for instance the dwelling or extrusion time from the moment in which the material is fed from the hopper through to the moment in which it is expelled from the extruder, as well as the rotating speed of the screw. It has been already explained that this rotating speed shall be very slow, to the extent that it can be stated that the slower this speed is, the better are the results.

In practice, taking also output and productivity requirements into due account, satisfactory results have been obtained when using an extrusion time not shorter than 4 minutes, while an optimum result has been obtained when using an extrusion time of 6 minutes.

A cross-head 10 is advantageously arranged at the outlet end of the extruder to enable the melt to be injected at a low pressure and slow speed into the moulding die with an appropriate plunger 11 and an injection nozzle 12. The possibility of extruding under low pressure conditions enables gas generation problems, arising from an overheating of the melt due to friction, to be prevented from occurring.

From this point, the process goes on according to state-of-art techniques, so that moulding dies can be provided so as to rotate on a carousel-like arrangement adapted to each time position a die in connection with the injection nozzle of the reciprocating screw; once that a die is positioned in this manner, the melt is injected into it. Upon filling, the die then is displaced by rotation and starts to cool down; its place in connection with the nozzle is taken by another die, so that a subsequent low-pressure injection phase can be completed. After cool-down, the moulding is ejected from the die and sent to a conditioning storage station.

## Claims

1. Method recycling solid household and similar waste, the waste comprising a compound of resins of different melting temperatures ranging from about 110° C to about 450° C, and appropriate stabilizers and bridging resins for combining polimerically or bind together the resins which are potentially incompatible, said waste components being previously cleaned to remove earthy substances, organic substances and metals, the method comprising a step in which said cleaned waste compound is finely shredded, and blending and alloying additives are added to said shredded compound, which is introduced in an extruder barrel (4) of an extruder, provided with a rotating screw (5) having a main pushing screw thread (6) alternating with a secondary pushing screw thread (7), and a cross-head (10) with an injection nozzle (12), wherein the temperature and the pressure of the compound during extrusion within the extruder barrel (4) increases progressively toward an extrusion gate, wherein the compound is heated up to a temperature of 170° to 180° C to melt only the resins with melting temperatures below 170° to 180° C, and not to melt the remaining resins which are embedded in the melted resin mass as inert fillers, and that the pressure increase curve of the compound comprises substantially two successives angles of slope, up to a highest pressure not exceeding 800 MPa, wherein the zone at which the pressure curve undergoes a variation in its angle of slope coincides with the zone of almost achieving the highest temperature value.

## Patentansprüche

1. Recycling-Verfahren für Haushaltsabfall und ähnlichen Abfall, der ein Gemisch von Kunststoffen verschiedener Schmelztemperaturen enthält, die im Bereich von etwa 110° C bis etwa 450°C liegen, und mit geeigneten Stabilisatoren und Brückenharzen, um die Kunststoffe, die potentiell inkompatibel sind, polymerisch zu kombinieren oder miteinander zu verbinden, wobei die Abfallbestandteile zuvor gereinigt sind, um erdige Substanzen, organische Substanzen und Metalle zu entfernen, wobei das Verfahren einen Schritt enthält, in dem das gereinigte Abfallgemisch fein zerschnipselt wird und vermischende und legierene Zusätze den zerschnipselten Gemisch hinzugefügt werden, das in eine Extrudertrommel (4) eines Extruders eingeführt wird, der eine rotierende Schnecke (5) mit einem Hauptdruckschraubengewinde (6) enthält, das sich mit einem Hilfsdruckschraubengewinde (7) abwechselt, sowie einen Querkopf (10) mit einer Injektionsdüse (12), wobei die Temperatur und der Druck des Gemischs während der Extrusion innerhalb der Extrudertrommel (4) in Richtung eines Extrusionsauslaufs fortlaufend zunimmt, wobei das Gemisch auf eine Temperatur von 170° C bis 180° C erhitzt wird, um nur die Kunststoffe mit Schmelztemperaturen unterhalb 170° bis 180°C zu schmelzen und die übrigen Kunststoffe nicht zu schmelzen, die in die geschmolzene Kunststoffmasse als inerte Füller eingebettet werdem und wobei die Druckanstiegkurve des Gemischs im wesentlichen zwei aufeinanderfolgende Neigungswinkel hat bis zu einem höchsten Druck, der 800 MPA nicht übersteigt, wobei der Bereich, bei dem die Druckkurve eine Änderung des Neigungswinkels aufweist, mit dem Bereich zusammenfällt, der beinahe den höchsten Temperaturwert erreicht.

## Revendications

1. Procédé de recyclage d'ordures ménagères solides et résidus analogues, les résidus comprenant un produit composite de résines à températures de fusion différentes, comprises entre environ 110 °C et environ 450 °C, et des stabilisants appropriés et des résines de liaison servant à combiner par polymérisation ou lier ensemble les résines qui sont éventuellement incompatibles, les composants de résidus étant préalablement nettoyés afin d'extraire des substances terreuses, des substances organiques et des métaux, le procédé comportant une étape selon laquelle le produit composite de résidus nettoyé est finement broyé, et des additifs de mélange et d'alliage sont ajoutés au produit composite broyé, lequel est introduit dans un cylindre d'extrudeuse (4) d'une extrudeuse, pourvue d'une vis entraînée en rotation (5) comportant un filet principal (6) de vis de poussée alternant avec un filet secondaire (7) de vis de poussée, et d'une tête (10) comportant une filière d'injection (12), la température et la pression du produit composite pendant l'extrusion dans le cylindre d'extrudeuse (4) augmentant progressivement vers un orifice d'extrusion, le produit composite étant chauffé jusqu'à une température de 170 à 180 °C de façon à ne provoquer une fusion que des résines possédant des températures de fusion inférieures à 170 à 180 °C, et à ne pas provoquer de fusion des autres résines qui sont enrobées dans la masse de résine fondue en tant que charges inertes, et la courbe d'augmentation de pression du produit composite comportant sensiblement deux angles de pente successifs, jusqu'à une pression la plus élevée ne dépassant pas 800 MPa, la zone à l'endroit de laquelle la courbe de pression subit une variation de son angle de pente coincidant avec la zone où la valeur de température la plus élevée est presque obtenue.
